# EUROPEAN PATENT SPECIFICATION

(11) **EP 4 563 424 B1**
(45) Date of publication and mention of the grant of the patent: **03.06.2026**
(21) Application number: 23213483.3
(22) Date of filing: 30.11.2023
(51) Int. Cl.: B60T 17/08

(54) **COMBINED SERVICE BRAKE AND PARKING BRAKE CYLINDER AND PNEUMATIC OR ELECTRO-PNEUMATIC VEHICLE BRAKE**
KOMBINIERTER BETRIEBSBREMS- UND FESTSTELLBREMSZYLINDER SOWIE PNEUMATISCHE ODER ELEKTROPNEUMATISCHE FAHRZEUGBREMSE
CYLINDRE COMBINE FREIN DE SERVICE ET FREIN DE STATIONNEMENT ET FREIN PNEUMATIQUE OU ELECTROPNEUMATIQUE DE VEHICULE

(43) Date of publication of application: 04.06.2025
(73) Proprietor: KNORR-BREMSE Systeme für Nutzfahrzeuge GmbH, 80809 München (DE)
(72) Inventor: LETOT, Guillaume, 14000 Caen (FR); HERICHER, Stéphane, 14670 Basseneville (FR)
(74) Representative: Kleine, Hubertus

(56) References cited:
- EP-A1- 0 490 841
- CN-A- 103 946 088
- GB-A- 1 508 171
- US-A1- 2010 320 039
- US-B1- 6 588 314

## Description

The present invention relates to a combined service brake and parking brake cylinder according to the preamble of claim 1, and to a pneumatic or electro-pneumatic vehicle brake comprising at least one combined service brake and parking brake cylinder according to claim 14.

Combined pneumatic service brake and parking brake cylinders with a service brake function and a parking brake function are usually arranged on rear axles of commercial vehicles and usually have two compressed air ports. One compressed air port controls the parking brake function and is under a parking brake release pressure for compressing an accumulator spring of the parking brake cylinder when the commercial vehicles are in a driving state. The other compressed air port controls the service brake function and is vented in the driving condition to brake the commercial vehicle via the service brake. The parking brake function is controlled by means of a usually in the form of a diaphragm cylinder. If the commercial vehicle is to be parked, the parking brake cylinder is released and the parking brake is applied via the spring tension of the accumulator spring.

The patent application EP 0 490 841 discloses a dual braking unit including, in series a cylinder with a diaphragm for controlling the service braking, including an operating chamber and an exhaust chamber separated from each other by the diaphragm.

A combined service brake and parking brake cylinder is known, for example, from DE 10 2014 002 112 A1. There, the parking brake cylinder and the service brake cylinder are arranged coaxially one behind the other and connected to each other by an intermediate flange. However, such an arrangement requires a relatively long installation space within the wheel arches of the commercial vehicles, which can cause space problems.

In order to solve this problem, a combined service brake and parking brake cylinder is proposed in DE 10 2014 002 112 A1, in which the service brake cylinder and the parking brake cylinder are placed laterally next to one another, the accumulator spring being arranged there around the service brake cylinder. In this case, the service brake piston is guided within the parking brake piston and axially thereon, which has a radially inwardly extending circumferential edge which abuts against an end-face annular surface of the service brake piston in order to drive the service brake piston together with the service brake piston rod into the applied position when the parking brake is applied.

However, this arrangement has some disadvantages. Firstly, the radially inwardly extending peripheral edge of the parking brake piston is loaded by the service brake pressure in the service brake chamber, so that during service braking a force is generated at the parking brake piston directed against the parking brake release pressure in the parking brake chamber, which loads the parking brake piston in the application direction of the parking brake.

Secondly, the effective area of the parking brake piston on which the parking brake release pressure can act to hold the parking brake released is relatively small, resulting in a high required parking brake release pressure or a low spring stiffness of the accumulator spring, but with disadvantages in terms of compressed air consumption or parking brake force.

A further problem can arise due to a leakage of compressed air from the compressed air chamber of the parking brake through the opening through which the piston rod protrudes from the brake cylinder into the brake caliper, since any excess pressure inside the brake caliper, in particular of more than 0.3 bar of overpressure, can lead to problems in the function of the disc brake.

An object of the present invention is to provide a combined service brake and parking brake cylinder in such a way that the entry of compressed air from the parking brake chamber into the area of the brake caliper is reliably prevented.

This object is solved by a combined service brake and parking brake cylinder with the features of claim 1 and by a pneumatic or electropneumatic vehicle brake with the features of claim 14.

A combined service brake and parking brake cylinder for actuating a service brake and a parking brake has a spring loaded parking brake cylinder with an at least partially cylindrical housing, a spring loaded parking brake piston and at least one accumulator spring loading the parking brake piston in an actuating direction of the parking brake. The parking brake piston is displaceably guided on a radially inner circumferential surface of the parking brake cylinder.

The parking brake piston and the housing delimit a parking brake chamber that can be ventilated by a parking brake pressure.

The combined service brake and parking brake cylinder also has a service brake cylinder and a service brake piston, wherein the service brake cylinder and the service brake piston delimit a service brake chamber which can be acted upon and vented by a service brake pressure.

Furthermore, the combined service brake and parking brake cylinder has a piston rod coupled to the service brake piston and the parking brake piston. The service brake cylinder is arranged radially inside the parking brake cylinder. The housing of the parking brake cylinder is closed at a first end face by a cover provided with an opening, into which a first end section of the piston rod protrudes.

An annular seal is arranged between an outer circumference of the piston rod and an inner circumference of the opening in the cover. The seal has a first sealing segment which is designed as an annular lip that rests on an outer end face of the cover, preferably on an outer end face of a sleeve of the cover, and functions as a pressure relief valve to allow pressurized air to escape into the environment.

With a seal designed in this way, it is possible to discharge the compressed air radially outwards into the environment along the first sealing segment in the event of a leak in the piston rod passage area through the opening in the cover.

The first sealing segment is designed in such a way that the annular lip prevents air from the environment from entering the interior of the brake caliper or the parking brake chamber, but is permeable to the compressed air from the parking brake chamber when excess pressure is present at the sealing lip, thus effectively preventing excessive excess pressure from entering the interior of the brake caliper.

Advantageous embodiments of the invention are the subject of the sub-claims.

According to an advantageous embodiment the seal seals the opening of the cover, which opening is open to the parking brake chamber.

According to an advantageous embodiment variant, the seal has a bulbous second sealing segment adjoining the first sealing segment which, in the assembled state, bears against the outer circumference of the piston rod with a first bearing surface facing away from the first sealing segment and bears against an inner circumference of a sleeve of the cover provided at the opening of the cover and extending into the spring accumulator chamber with a second bearing surface opposite thereto.

According to an advantageous further development, several through-holes extending from the first contact surface to the second contact surface are provided in the bulbous second sealing segment.

This allows the leakage pressure air that has reached this area to be discharged into an area between the sealing lip and the outer end face of the cover and from there into the environment.

According to a further advantageous embodiment, the through holes are aligned radially to the longitudinal axis of the piston rod.

According to a further advantageous embodiment variant, the seal has a bulbous third sealing segment and a cylindrical ring-shaped fourth sealing segment adjoining it, wherein the third sealing segment has an end face facing the spring storage chamber and bears with two opposing contact surfaces against the outer circumference of the piston rod on the one hand and against the inner circumference of the sleeve on the other hand, and the fourth sealing segment bears with two opposing contact surfaces against the outer circumference of the piston rod on the one hand and against the inner circumference of the sleeve on the other hand.

According to an advantageous variant, the seal is formed in one piece.

According to an alternative embodiment, the seal is formed in several parts. In particular, the first and second sealing segments are combined into one component, as are the third and fourth sealing segments.

According to a further advantageous embodiment variant, the sleeve of the cover is made of a different material than the housing of the parking brake cylinder.

According to a still further advantageous embodiment, a recess is formed in the outer end face of the cover, in which the first sealing segment of the seal lies. Such recess provides space for a deflection movement of the sealing lip as a result of compressed air impact.

According to a still further advantageous embodiment, the service brake cylinder is arranged radially inside an accumulator spring chamber.

According to a still further advantageous embodiment, the parking brake piston includes a central opening having a bearing allowing the piston rod and the parking brake piston to move axially relative to each other. A separate bottom to support the accumulator spring is therefore not necessary, which enables additional shortening of the axial length of the parking brake cylinder.

According to an advantageous variant, the piston rod has the same outer diameter throughout its axial length, which avoid pressure loads on piston rod.

According to a still further advantageous variant, a first actuating element provided to actuate a brake caliper is pivotally received in a recess at the first end of the piston rod, which enables the first actuating element to better follow the movement of a lever of a brake caliper.

The pneumatic or electropneumatic vehicle brake according to the invention is characterized by at least one combined service brake and parking brake cylinder as described above.

In an advantageous variant the pneumatic or electropneumatic vehicle brake comprises a brake caliper with a flange, on which the combined service brake and parking brake cylinder is mounted, wherein the outer end face of the cover of the parking brake cylinder delimiting the parking brake chamber faces the flange of the brake caliper, wherein the first sealing segment of the seal rests between the outer end face of the cover and the flange of the brake caliper and functions as a pressure relief valve to allow pressurized air to escape from the parking brake chamber or from an inner space delimited at least partially by the brake caliper into the environment.

Preferred embodiments are explained in more detail below with reference to the accompanying drawings. It shows:
- Fig. 1: is a schematic isometric view of an embodiment of a service brake and parking brake cylinder according to the invention,
- Fig. 2: a sectional view through the service brake and parking brake cylinder according to Figure 1 to illustrate the arrangement of the service brake cylinder and the parking brake cylinder,
- Fig. 3: another sectional view through the service brake and parking brake cylinder according to Figure 1 to illustrate the arrangement of the service brake cylinder and the parking brake cylinder,
- Fig. 4: a detail enlargement of an interface between a caliper of an air disk brake and the parking brake cylinder of Fig. 2 showing a first embodiment of a seal for sealing the transition area between the parking brake chamber of the brake cylinder and the caliper,
- Fig. 5: a sectional view through the service brake and parking brake cylinder according to Figure 1 with a second embodiment of a seal for sealing the transition area between the parking brake chamber and the caliper,
- Fig. 6: a detail enlargement of an interface between a caliper of an air disk brake and the parking brake cylinder of Fig. 4 showing the second embodiment of a seal for sealing the transition area between the parking brake chamber of the brake cylinder and the caliper,
- Fig. 7: a side view of the flange area between the brake caliper and the parking brake cylinder, and
- Fig. 8: a schematic isometric view of a part of a preferred embodiment of a seal.

In the following description of the figures, terms such as top, bottom, left, right, front, rear, etc. refer exclusively to the exemplary representation and position of the spring-applied parking brake cylinder, service brake cylinder, piston rod, housing, seal, cover and the like selected in the respective figures. These terms are not to be understood restrictively, i.e. these references may change due to different working positions or the mirror-symmetrical design or the like.

A combined pneumatic service brake and parking brake cylinder 1 having a service function and a parking brake function as described hereinafter is usually arranged on a wheel of a rear axle of commercial vehicles and usually has two compressed air ports.

A first compressed air port 24 controls the parking brake function and, in the driving state of commercial vehicles, is under a parking brake release pressure for compressing an accumulator spring 22 of a parking brake cylinder 2.

A second compressed air port (not shown) controls the service brake function and, particularly in the driving state, can be pressurized to brake the commercial vehicle via the service brake. In this case, the service brake function is carried out by means of a service brake cylinder 3 designed as a diaphragm cylinder or brake piston cylinder.

If the commercial vehicle is to be parked, the parking brake cylinder 2 is vented and the parking brake is applied via the spring tension of the accumulator spring 22.

In an electro-pneumatic brake system, for example, the pressure for the two compressed air ports 24 is generated by a solenoid valve device not shown here, which is supplied with compressed air under supply pressure from at least one compressed air supply. For coordinated control or regulation of the service brake pressure or parking brake pressure introduced into the two compressed air ports 24, the solenoid valve device is controlled by an electronic control system.

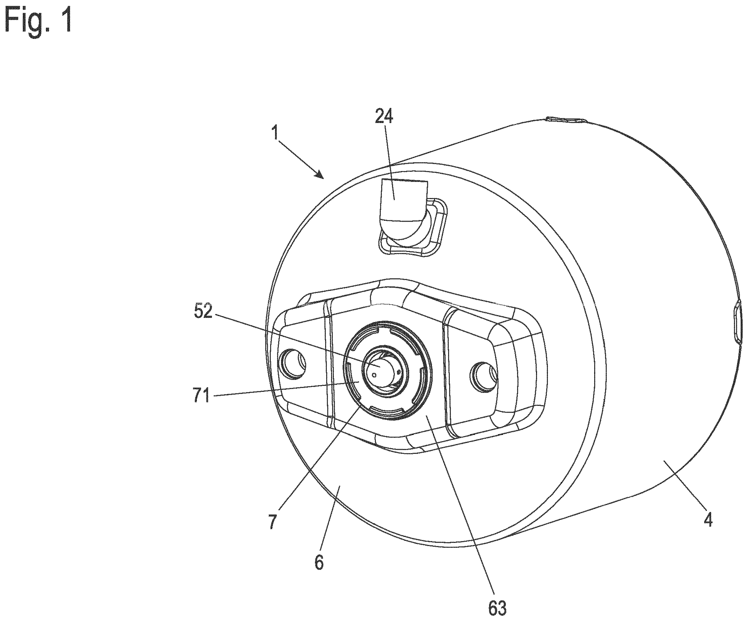

**Fig. 1** shows a perspective view of a preferred embodiment of a combined service brake and parking brake cylinder 1 of an electro-pneumatic brake system of a commercial vehicle according to the invention, looking at one end face from which a first actuating element 52 protrudes, for example for actuating a brake caliper 10 of a disc brake, can be seen.

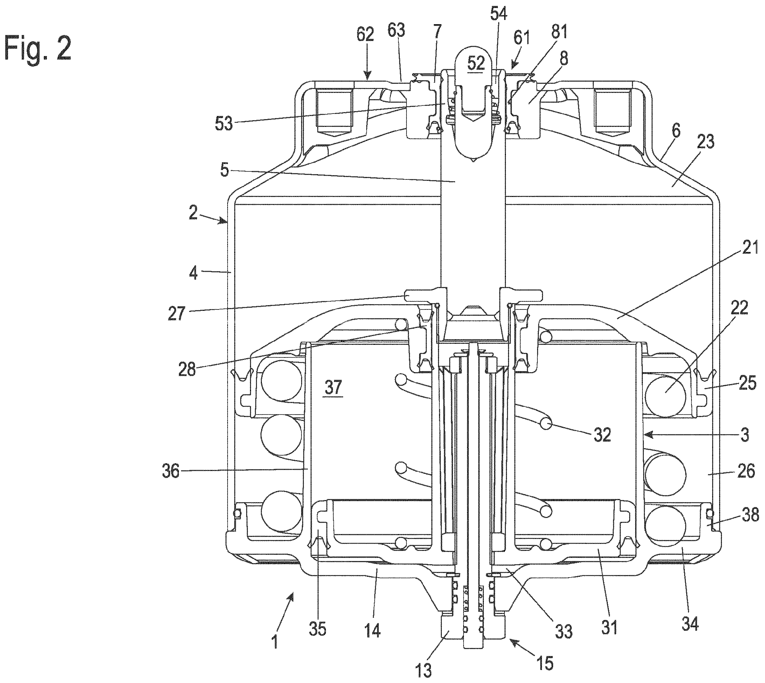

**Fig. 2****,** **Fig. 3** **and** **Fig. 5** represent a cross-sectional view of the combined service brake and parking brake cylinder 1 of Fig. 1, in a situation in which the service brake and the parking brake are released, in particular during a driving condition of the commercial vehicle, the combined service brake and parking brake cylinder 1 comprises the parking brake cylinder 2, a parking brake piston 21 axially slidably guided therein, and the accumulator spring 22 loading the parking brake piston 21 in an applied position of the parking brake.

The parking brake cylinder 2 comprises a substantially cylindrical parking brake cylinder housing 4 with here, for example, two covers 6, 14 attached to the end faces, wherein the first actuating element 52 for the disc brake projects from a central through-opening of a first cover 6 and the second actuating element 13 of the emergency release device projects from a central through-opening of a second cover 14.

Alternatively, the parking brake cylinder housing 4 could also be pot-shaped and then have, for example, only one cover. Generally, the parking brake cylinder housing 4 forms a closed housing of the parking brake cylinder 2, in which the service brake cylinder 3 is completely included here, for example.

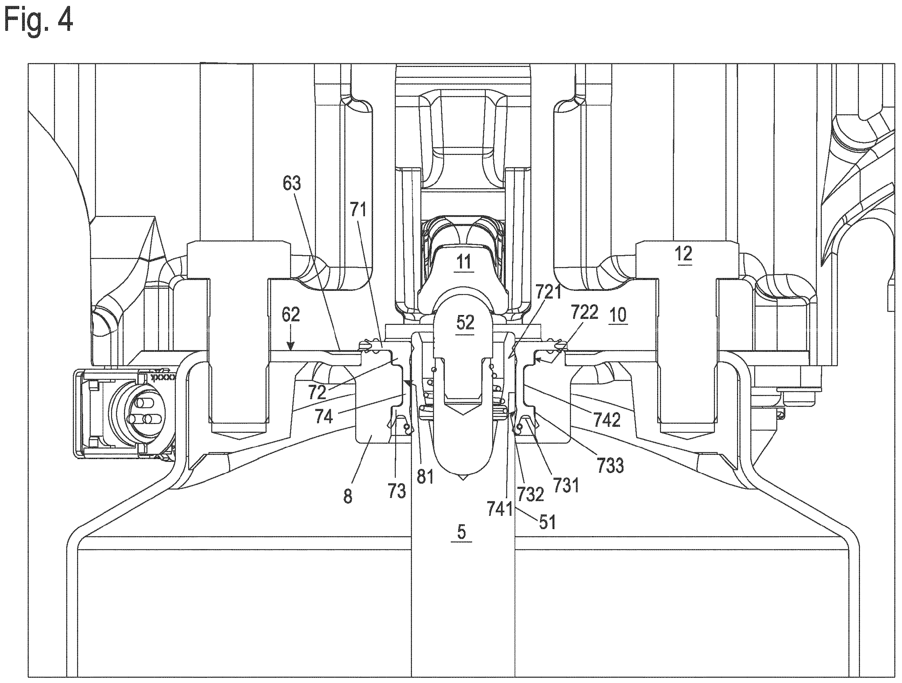

The first actuating element 52 is preferably designed as a pusher which is pivotally received in a recess 54 at the first end 53 of the piston rod 5. Preferably the first actuating element 52 is pivotally received in the recess 54 enabling the first actuating element 52 to follow the movement of a lever 11 of a brake caliper 10 (shown in Fig. 4) through deflection movement. The first actuating element 52 can be springloaded in a center position.

The parking brake piston 21 is axially displaceably guided on a radially inner circumferential surface of the parking brake cylinder 2 or of the parking brake cylinder housing 4, wherein a first movement seal 25 is arranged between a radially outer edge of the parking brake piston 21 and the radially inner circumferential surface of the parking brake cylinder 2 or of the parking brake cylinder housing 4 and which, in addition to a sealing function, also performs a guide function for the parking brake piston 21.

With its one side facing away from the accumulator spring 22, the parking brake piston 21 delimits a parking brake chamber 23 which can be pressurized and vented by a parking brake pressure via the first compressed air connection 24. The parking brake chamber 23 is filled with pressurized air in a driving state of the vehicle and vented in a parking state of the vehicle.

The accumulator spring 22 is then supported with its one end on the other side of the parking brake piston 21, the other end of which is supported on the parking brake cylinder housing 4 in an accumulator spring chamber 26.

As shown in Fig. 2, 3 and 5, the accumulator spring chamber 26 is sealed from the parking brake chamber 23 above by the first movement seal 25 and a bearing 28, which will be described in more detail further below and is therefore not pressurized and vented by the parking brake pressure.

The first air pressure port 24 is formed, for example, in the first cover 6. However, it could also be formed in a bottom of the parking brake cylinder 2 or the parking brake cylinder housing 4 if the parking brake cylinder housing 4 is pot-shaped, for example.

As mentioned before, the accumulator spring 22 is accommodated in an accumulator spring chamber 26 which is formed here as an annular chamber and is radially outer with respect to the service brake cylinder 3, and which is limited or bounded radially inwardly by a radially outer circumferential surface of a service brake cylinder housing 34 of the service brake cylinder 3 and radially outwardly by the radially inner circumferential surface of the parking brake cylinder housing 4.

Axially, the accumulator spring chamber 26 is limited or bounded by the parking brake piston 21 and the service brake cylinder housing 34.

The service brake cylinder 3 or the service brake cylinder housing 34 directly guides an axially displaceable service brake piston 31, the service brake cylinder 3 and the service brake piston 31 delimiting a service brake chamber 33 which can be pressurized and vented with a service brake pressure via the second compressed air port (not shown).

The service brake cylinder 3 or the service brake cylinder housing 34 of the service brake cylinder 3 is arranged radially (i.e. radially to the piston rod 5) and here, for example, also axially (i.e. axially to the piston rod 5), preferably completely within the parking brake cylinder 2 or within the parking brake cylinder housing 4 of the parking brake cylinder 2. More preferably the service brake cylinder 3 is arranged radially inside the accumulator spring chamber 26.

Further, the service brake piston 31 is axially slidably guided directly on the radially inner peripheral surface of the service brake cylinder 3 or the service brake cylinder housing 34. This direct guidance includes that a third movement seal 35 is arranged therebetween, which here is connected to the radially outer edge of the service brake piston 31 in addition to a sealing function also performs a guiding function for the service brake piston 31.

In both embodiments, the service brake piston 31 is connected to a piston rod 5, which is made hollow here, for example, to receive the emergency release device 15 in its interior. The piston rod 5 then actuates the parking brake via the first actuating element 52 when the service brake chamber 33 is pressurized with a service brake application pressure, and which releases the service brake when the service brake chamber 33 is vented. The end of the piston rod 5 facing the caliper 10 can then project radially outwardly away from the parking brake chamber 23 in a mushroom-like manner.

The service brake cylinder 3 or the service brake cylinder housing 34 is here, for example, of pot-shaped design and has a cylindrical wall 36 extending in parallel into the parking brake cylinder 2 or into the parking brake cylinder housing 4, and a bottom. The bottom is provided, for example, with a central opening through which the parking brake piston rod 5 then projects into the parking brake cylinder 2 or into the parking brake chamber 23. Furthermore, the piston rod 5 penetrates the parking brake chamber 23 centrally and then receives the first actuating element 52 for the disc brake in a recess at its end facing the disc brake and projecting out of the parking brake cylinder housing 4 through the through-opening 61 of the first cover 6.

A return spring chamber 37 is formed here between the service brake piston 31 and the bottom of the service brake cylinder 3, with a return spring 32 which loads the service brake piston 31 into the service brake release position. Also, the return spring chamber 37 is penetrated axially and centrally by the piston rod 5.

The return spring chamber 37 is sealed from the service brake chamber 33 by the third movement seal 35 as described above and therefore not pressurized and vented by the service brake pressure.

As explained above, the here for example pot-shaped service brake cylinder 3 has the free edge 38 which is preferably fixed to the parking brake cylinder 2 on the inside, in particular in the region of the fixing of the end-face second cover 14 to the parking brake cylinder 2, whereby this second cover 14 also delimits or closes the service brake chamber 33.

Then, the service brake chamber 33 which can be ventilated and exhausted is delimited by the cylindrical wall 36 of the service brake cylinder housing 34, the second cover 14 of the parking brake cylinder 2 and the service brake piston 31 or, alternatively, by the above-mentioned diaphragm in the case a the above-mentioned diaphragm cylinder used as the service brake cylinder 3.

As can also be seen in **Figures 2 - 6****,** the service brake cylinder 3 is arranged radially within the parking brake cylinder 2. The housing 4 of the parking brake cylinder 2 is closed at a first end face by a cover 6 provided with an opening 61, into which a first end section 53 of the piston rod 5 projects.

An actuator 52 is accommodated in this first end section 53 of the piston rod 5, the free end of which, as shown in **Figure 4****,** engages in a dome-shaped recess of a brake lever 11 of a brake caliper 10 of a vehicle brake.

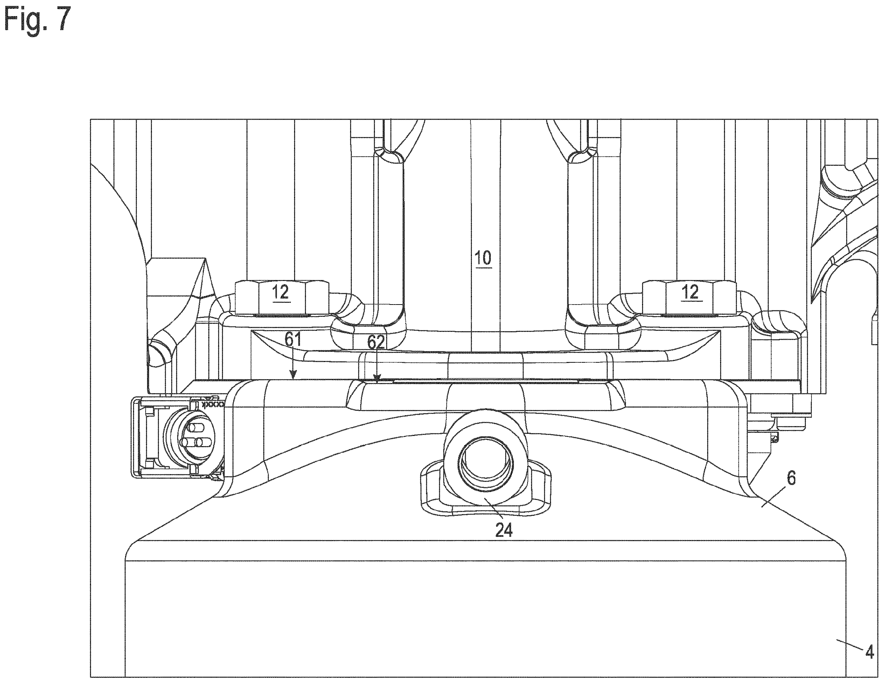

The service brake and parking brake cylinder 1 is preferably fixed to a flange area of the brake caliper 10 with the aid of screws 12, as shown in **Figure 7** as an example.

The parking brake piston 21 further includes a central opening having a bearing 28 through which the parking brake piston 21 is axially guided on the piston rod 5. The bearing 28 therefore allows the piston rod 5 and the parking brake piston 21 to move axially relative to each other. The bearing 28 is designed, for example, as a sealing bearing.

The parking brake piston 21 then extends, viewed radially, from the bearing 28 or from the central opening of the parking brake piston 21 beyond a radially outer circumferential surface of the service brake cylinder 3 or of the service brake cylinder housing 36 to the radially inner circumferential surface of the parking brake cylinder 2 or of the parking brake cylinder housing 4. The effective surface of the parking brake piston 21 on which the parking brake pressure or the parking brake release pressure acts is located on the side of the parking brake piston 21 facing the parking brake chamber 23 and then also extends from the bearing 28 to the radially inner circumferential surface of the parking brake cylinder 2 or of the parking brake cylinder housing 4.

The first movement seal 25 arranged at the radially outer edge of the parking brake piston 21 and the bearing 28 are arranged so as to move substantially together and in parallel to the axis of the cylinder 1

As also shown in Fig. 2 to 4, the piston rod 5 has, in particular at its radially outer periphery, a radial protrusion 27 which forms an axial stop for the bearing 28 or for the central opening of the parking brake piston 21.

This radial protrusion 27 is arranged on the piston rod 5, for example, in such a way that the parking brake piston 21 brings the piston rod 5 into the parking brake application position by abutting against the radial protrusion 27 when the parking brake chamber 23 is vented to apply the parking brake.

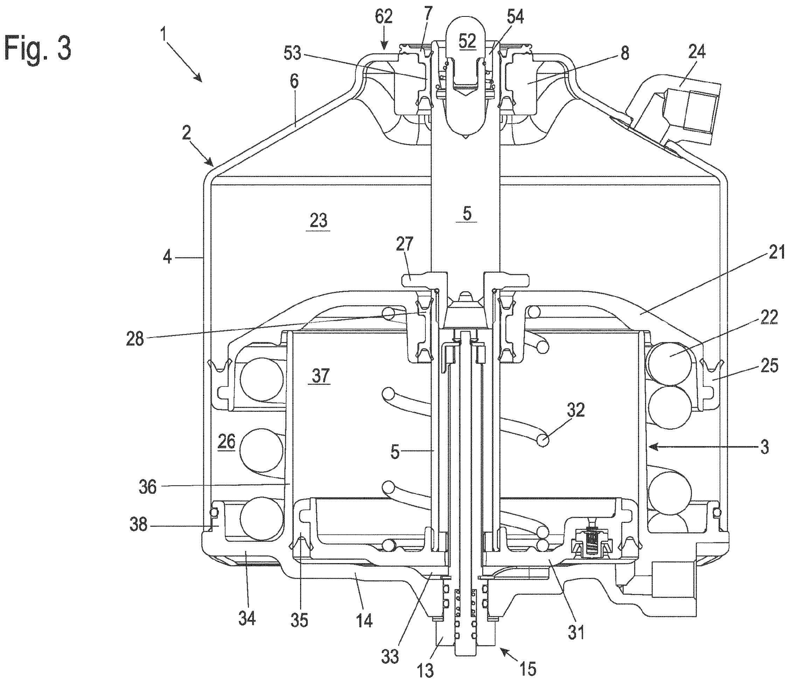

As shown in Fig. 3, the piston rod 5 preferably has the same outer diameter throughout its axial length in order to avoid any pressure forces acting on the piston rod 5.

The piston rod 5 can be formed in one piece with its first end section 53 and an opposite end abutting a return spring chamber 37 side of the service brake piston 31.

As an alternative, the piston rod 5 can be formed in basically two pieces with a first parking brake section including the first end section 53 and ending below the radial protrusion 27, and a second service brake section having a first end mounted on an outer circumference of the protrusion 27 or the first parking brake section of piston rod 5 and an opposite end abutting the return spring chamber 37 side of the service brake piston 31. Also in the two part piston rod 5 embodiment preferably the parking brake section has the same outer diameter as the service brake section.

As shown further in **Figures 2 - 6****,** an annular seal 7 is arranged between an outer circumference 51 of the piston rod 5 and an inner circumference of the opening 61 of the cover 6.

This seal 7 has a first sealing segment 71, which is designed as an annular lip resting on an outer end face 62 of the cover 6 and functioning as a pressure relief valve to allow pressurized air to escape from the parking brake chamber 23 into the environment.

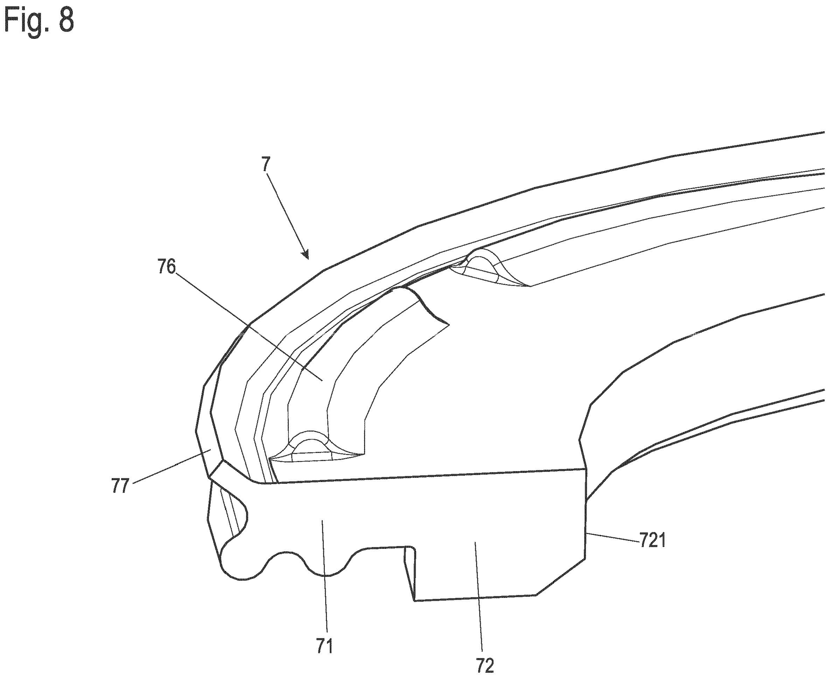

A single perspective view of a section of such a seal 7 is shown in **Figure 8****.** The seal 7 here has a bulbous second sealing segment 72 adjoining the first sealing segment 71, which in the assembled state rests against the outer circumference 51 of the piston rod 5. The second sealing segment 72 has a first contact surface 721 facing away from the first sealing segment 71, as can be seen in Figures 2 to 6.

A second abutment surface 722 opposite the first contact surface 721 abuts an inner circumference 81 of a sleeve 8 of the cover 6, provided at the opening 61 of the cover 6 and extending into the parking brake chamber 23.

Here, bulbous is to be understood in particular as reinforced in its material thickness relative to the web-like first sealing segment 71. In the embodiment example shown in Figure 8 and in the installed state in Figure 4, the second sealing segment 72 protrudes into a recess in the sleeve 8 of the cover 6, with the recess extending from the surface facing the brake caliper 10 to the surface facing the piston rod 5.

Furthermore, a bead 76 provided with perforations 761 is formed on a surface of the first sealing segment 71 facing the brake caliper 10, which bead protrudes from the surface facing the brake caliper 10. Towards the radial outer edge (in the installed state), i.e. facing the environment, a web projects preferably at an obtuse angle from the end of the surface facing the brake caliper 10, which in the installed state rests against a counter surface of the brake caliper 10.

The sleeve 8 as part of the cover 6 serves in particular to increase the possible contact surface of the seal 7 between the outer circumference 51 of the piston rod 5 and the cover 6.

The sleeve 8 can be formed in one piece with the cover 6.

In the preferred embodiment shown here, the sleeve 8 of the cover 6 is designed as a separate component fixed to the remaining part of the cover 6. This enables in particular the selection of a different material for the sleeve 8 compared to the remaining part of the cover 6 as well as other manufacturing options for the sleeve 8, for example manufacturing by cold forming, hot forming or the like.

As can also be seen in Figures 2 to 6, the seal 7 preferably has a bulbous third sealing segment 73 and a cylindrical ring-shaped fourth sealing segment 74 adjoining it.

The third sealing segment 73 has an end face 731 facing the parking brake chamber 23 and rests with two opposing contact surfaces 732, 733 on the outer circumference 51 of the piston rod 5 on the one hand and on the inner circumference 81 of the sleeve 8 on the other.

The fourth sealing segment 74 lies with two opposing contact surfaces 741, 742 on the outer circumference 51 of the piston rod 5 on the one hand and on the inner circumference 81 of the sleeve 8 on the other.

In the embodiments shown in Figures 2 to 6, the four sealing segments 71, 72, 73 and 74 are shown as a one-piece component.

It is also conceivable for these sealing segments 71, 72, 73 and 74 to be made up of several parts, in particular for the seal 7 to be divided into two parts, in which the first and second sealing segments 71, 72 are combined to form a one-piece segment and the third and fourth sealing segments 73, 74 are combined to form a second component.

In principle, a different division of the multiple parts of the seal 7 is also conceivable.

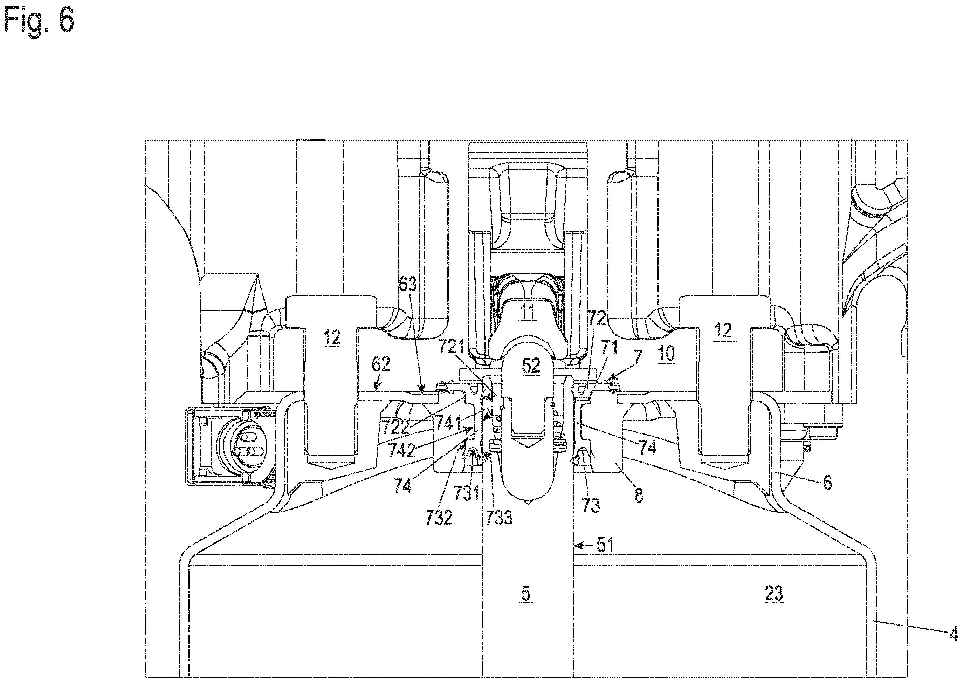

As a comparison of Figures 4 and 6 shows, in the embodiment shown in Figure 4, the second sealing segment 72 is solid, whereas in the embodiment shown in Figure 6, a plurality of through-holes 75 extending from the first contact surface 721 to the second contact surface 722 are provided in the bulbous second sealing segment 72.

These through-holes 75 are preferably aligned radially to the longitudinal axis of the piston rod 5. However, it is also conceivable for the through holes 75 to be aligned at an angle to a radial axis.

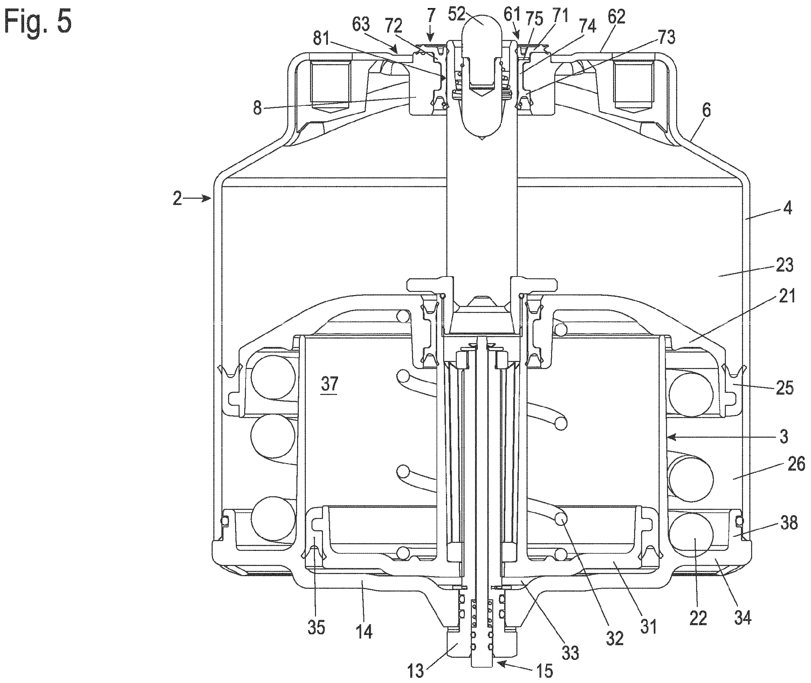

The design variants of the seal 7 shown in Figures 2 to 4 on the one hand and Figures 5 and 6 on the other enable different venting paths along the seal 7 in the event of leakage, i.e. the escape of fluid in the parking brake chamber 23 in a non-braking position of the parking brake cylinder 2.

The seal 7, in particular its rigidity, is designed in such a way that it allows compressed air above a pressure of preferably 0.3 bar overpressure (i.e. 0,3 bar more than ambient air pressure) to escape into the environment.

Thus, in the event of a leakage of compressed air in an area between the outer circumference 51 of the piston rod 5 and the second sealing segment 72, the compressed air can flow along the piston rod 5 and then further along the first sealing segment 71. The design of the first sealing segment 71 as a sealing lip enables the sealing lip to be deformed in such a way that the air can easily pass through a gap between the first sealing segment 71 and a contact surface or flange of the brake caliper 10 opposite it to the outside and into the environment, thereby preventing compressed air from entering the interior of the brake caliper 10.

An inflow of ambient air in the opposite direction, i.e. from the environment in the direction of the parking brake chamber 23 or into the interior of the brake caliper, is prevented by the first sealing segment 71.

In the embodiment shown in Figures 5 and 6, the leakage compressed air flowing along the piston rod 5 can pass through the through-holes 75 into an intermediate space created by the compressed air between the sleeve 8 and the first sealing segment 71 before reaching an end of the second sealing segment 72 close to the brake caliper 10 and from there be guided laterally into the surroundings by evasion of the first sealing segment 71, which is designed as a sealing lip.

As shown in Figures 2 to 6 and in Figure 7, a recess 63 is formed in the outer end face 62 of the cover 6, in which the first sealing segment 71 of the seal 7 lies, in order to increase the possibility of the first sealing segment 71 deflecting.

As a result, as can be clearly seen in Figure 7 in particular, when the service brake and parking brake cylinder 1 is mounted on a brake caliper 10, an air gap remains in the area in which the seal 7 is arranged, which facilitates the escape of excess pressure air into the environment.

### List of reference signs

- 1: Combined service brake and parking brake cylinder

- 2: parking brake cylinder
- 21: parking brake piston
- 22: accumulator spring
- 23: parking brake chamber
- 24: first compressed air port
- 25: first movement seal
- 26: accumulator spring chamber
- 27: radial protrusion
- 28: bearing

- 3: service brake cylinder
- 31: service brake piston
- 32: return spring
- 33: service brake chamber
- 34: service brake cylinder housing
- 35: third movement seal
- 36: wall
- 37: return spring chamber
- 38: edge

- 4: housing

- 5: piston rod
- 51: outer circumference
- 52: first actuating element
- 53: first end
- 54: recess

- 6: first cover
- 61: opening
- 62: outer end face
- 63: depression

- 7: sealing
- 71: first sealing segment
- 72: second sealing segment
- 721: first contact surface
- 722: second contact surface
- 73: third sealing segment
- 731: end face
- 732: contact surface
- 733: contact surface
- 74: fourth sealing segment
- 741: contact surface
- 742: contact surface
- 75: through-hole
- 76: bead
- 761: perforation
- 77: web

- 8: sleeve
- 81: inner circumference

- 10: brake caliper
- 11: brake lever
- 12: screw
- 13: second actuating element
- 14: second cover
- 15: emergency release device

## Claims

1. Combined service brake and parking brake cylinder (1) for actuating a service brake and a parking brake, comprising
- a spring-loaded parking brake cylinder (2) with a housing (4) which is cylindrical at least in sections, a spring-loaded parking brake piston (21) and at least one accumulator spring (22) which loads the parking brake piston (21) in an actuating direction of the parking brake, wherein the parking brake piston (21) is displaceably guided on a radially inner circumferential surface of the parking brake cylinder (2), and the parking brake piston (21) and the housing (4) delimit a parking brake chamber (23) which can be ventilated by a parking brake pressure,
- a service brake cylinder (3) and a service brake piston (31), wherein the service brake cylinder (3) and the service brake piston (31) delimit a service brake chamber (33) which can be acted upon and vented by a service brake pressure,
- a piston rod (5) coupled to the parking brake piston (21) and the service brake piston (31),
- wherein the service brake cylinder (3), viewed radially, is arranged inside the parking brake cylinder (2),
- wherein the housing (4) of the parking brake cylinder (2) is closed at a first end face by a cover (6) provided with an opening (61), into which a first end portion (53) of the piston rod (5) projects,
- wherein an annular seal (7) is arranged between an outer circumference (51) of the piston rod (5) and an inner circumference of the opening (61) of the cover (6),
**characterized in that**
- the seal (7) has a first sealing segment (71) which is designed as an annular lip which rests on an outer end face (62) of the cover (6), preferably on an outer end face of a sleeve (8) of the cover (6), and functions as a pressure relief valve to allow pressurized air to escape into the environment.

2. Combined service brake and parking brake cylinder (1) according to claim 1, **characterized in that** the seal (7) seals the opening (61) of the cover (6), which opening is open to the parking brake chamber (23).

3. Combined service brake and parking brake cylinder (1) according to claim 1 or 2, **characterized in that** the seal (7) has a bulbous second sealing segment (72) which adjoins the first sealing segment (71) and which, in the assembled state, bears against the outer circumference (51) of the piston rod (5) with a first bearing surface (721) facing away from the first sealing segment (71) and bears against an inner circumference (81) of the sleeve (8) provided at the opening (61) of the cover (6) and extending into the parking brake chamber (23) with a second bearing surface (722) opposite to the first bearing surface (721).

4. Combined service brake and parking brake cylinder (1) according to claim 3, **characterized in that** a plurality of through-holes (75) extending from the first bearing surface (721) to the second bearing surface (722) are provided in the bulbous second sealing segment (72).

5. Combined service brake and parking brake cylinder (1) according to claim 4, **characterized in that** the through-holes (75) are aligned radially to the longitudinal axis of the piston rod (5).

6. Combined service brake and parking brake cylinder (1) according to any of claims 3 to 5, **characterized in that** the seal (7) has a bulbous third sealing segment (73) and a cylindrical ring-shaped fourth sealing segment (74) adjoining the latter, the third sealing segment (73) having an end face (731) facing the parking brake chamber (23) and bearing with two opposing bearing surfaces (732, 733) on the one hand against the outer circumference (51) of the piston rod (5) and on the other hand against the inner circumference (81) of the sleeve (8) and the fourth sealing segment (74) with two opposing contact surfaces (741, 742) on the one hand against the outer circumference (51) of the piston rod (5) and on the other hand against the inner circumference (81) of the sleeve (8).

7. Combined service brake and parking brake cylinder (1) according to any of claims 3 to 6, **characterized in that** the seal (7) is formed in one piece or in several parts.

8. Combined service brake and parking brake cylinder (1) according to any of claims 3 to 7, **characterized in that** the sleeve (8) of the cover (6) is made of a different material than the housing (4) of the parking brake cylinder (2).

9. Combined service brake and parking brake cylinder (1) according to any of the preceding claims, **characterized in that** a recess (63) is formed in the outer end face (62) of the cover (6), in which recess the first sealing segment (71) of the seal (7) lies.

10. Combined service brake and parking brake cylinder (1) according to any of the preceding claims, **characterized in that** the service brake cylinder (3) is arranged radially inside an accumulator spring chamber (26).

11. Combined service brake and parking brake cylinder (1) according to any of the preceding claims, **characterized in that** the parking brake piston (21) includes a central opening having a bearing (28) allowing the piston rod (5) and the parking brake piston (21) to move axially relative to each other.

12. Combined service brake and parking brake cylinder (1) according to any of the preceding claims, **characterized in that** the piston rod (5) has the same outer diameter throughout its axial length.

13. Combined service brake and parking brake cylinder (1) according to any of the preceding claims, **characterized in that** a first actuating element (52) provided to actuate a brake caliper (10) is pivotally received in a recess (54) at the first end (53) of the piston rod (5).

14. Pneumatic or electropneumatic vehicle brake with at least one combined service brake and parking brake cylinder (1) according to one of the preceding claims.

15. Pneumatic or electropneumatic vehicle brake according to claim 14, comprising a brake caliper (10) with a flange, on which the combined service brake and parking brake cylinder (1) is mounted, wherein the outer end face (62) of the cover (6) of the parking brake cylinder (2) delimiting the parking brake chamber (23) faces the flange of the brake caliper (10), wherein the first sealing segment (71) of the seal (7) rests between the outer end face (62) of the cover (6) and the flange of the brake caliper (10) and functions as a pressure relief valve to allow pressurized air to escape from the parking brake chamber (23) or from an inner space delimited at least partially by the brake caliper (10) into the environment.

## Patentansprüche

1. Kombinierter Betriebsbrems- und Feststellbremszylinder (1) zum Betätigen einer Betriebsbremse und einer Feststellbremse, umfassend
- einen federbelasteten Feststellbremszylinder (2) mit einem Gehäuse (4), das mindestens abschnittsweise zylindrisch ist, einem federbelasteten Feststellbremskolben (21) und mindestens einer Akkumulatorfeder (22), die den Feststellbremskolben (21) in einer Betätigungsrichtung der Feststellbremse belastet, wobei der Feststellbremskolben (21) auf einer radial inneren Umfangsoberfläche des Feststellbremszylinders (2) verschiebbar geführt ist und der Feststellbremskolben (21) und das Gehäuse (4) eine Feststellbremskammer (23) abgrenzen, die durch einen Feststellbremsdruck belüftet werden kann,
- einen Betriebsbremszylinder (3) und ein Betriebsbremskolben (31), wobei der Betriebsbremszylinder (3) und der Betriebsbremskolben (31) eine Betriebsbremskammer (33) abgrenzen, die durch einen Betriebsbremsdruck beaufschlagt und entlüftet werden kann,
- eine Kolbenstange (5), die mit dem Feststellbremskolben (21) und dem Betriebsbremskolben (31) gekoppelt ist,
- wobei der Betriebsbremszylinder (3), radial betrachtet, innerhalb des Feststellbremszylinders (2) angeordnet ist,
- wobei das Gehäuse (4) des Feststellbremszylinders (2) an einer ersten Endfläche durch einen Deckel (6) verschlossen ist, der mit einer Öffnung (61) versehen ist, in die ein erster Endabschnitt (53) der Kolbenstange (5) hineinragt,
- wobei eine kreisförmige Dichtung (7) zwischen einem äußeren Umfang (51) der Kolbenstange (5) und einem inneren Umfang der Öffnung (61) des Deckels (6) angeordnet ist,
**dadurch gekennzeichnet, dass**
- die Dichtung (7) ein erstes Dichtungssegment (71) aufweist, das als eine kreisförmige Lippe ausgebildet ist, die auf einer äußeren Endfläche (62) des Deckels (6), vorzugsweise auf einer äußeren Endfläche einer Manschette (8) des Deckels (6), aufliegt und als ein Druckentlastungsventil dient, um Druckluft zu ermöglichen, in die Umgebung zu entweichen.

2. Kombinierter Betriebsbrems- und Feststellbremszylinder (1) nach Anspruch 1, **dadurch gekennzeichnet, dass** die Dichtung (7) die Öffnung (61) des Deckels (6) abdichtet, wobei die Öffnung zu der Feststellbremskammer (23) hin offen ist.

3. Kombinierter Betriebsbrems- und Feststellbremszylinder (1) nach Anspruch 1 oder 2, **dadurch gekennzeichnet, dass** die Dichtung (7) ein bauchiges zweites Dichtungssegment (72) aufweist, das an das erste Dichtungssegment (71) angrenzt und das im zusammengebauten Zustand mit einer ersten, von dem ersten Dichtungssegment (71) abgewandten Auflageoberfläche (721) an den äußeren Umfang (51) der Kolbenstange (5) anliegt und mit einer zweiten, der ersten Auflageoberfläche (721) gegenüberliegenden Auflageoberfläche (722) an den inneren Umfang (81) der an der Öffnung (61) des Deckels (6) bereitgestellten und sich in die Feststellbremskammer (23) erstreckende Manschette (8) anliegt.

4. Kombinierter Betriebsbrems- und Feststellbremszylinder (1) nach Anspruch 3, **dadurch gekennzeichnet, dass** in dem bauchigen zweiten Dichtungssegment (72) eine Vielzahl von Durchgangslöchern (75) bereitgestellt sind, die sich von der ersten Auflageoberfläche (721) zu der zweiten Auflageoberfläche (722) erstrecken.

5. Kombinierter Betriebsbrems- und Feststellbremszylinder (1) nach Anspruch 4, **dadurch gekennzeichnet, dass** die Durchgangslöcher (75) radial zu der Längsachse der Kolbenstange (5) ausgerichtet sind.

6. Kombinierter Betriebs- und Feststellbremszylinder (1) nach einem der Ansprüche 3 bis 5, **dadurch gekennzeichnet, dass** die Dichtung (7) ein bauchiges drittes Dichtungssegment (73) und ein dem Letzteren angrenzendes zylindrisches ringförmiges viertes Dichtungssegment (74) aufweist, wobei das dritte Dichtungssegment (73) eine der Feststellbremskammer (23) zugewandte Endfläche (731) aufweist und mit zwei gegenüberliegenden Auflageoberflächen (732, 733) einerseits gegen den äußeren Umfang (51) der Kolbenstange (5) und andererseits gegen den inneren Umfang (81) der Manschette (8) und das vierte Dichtungssegment (74) mit zwei gegenüberliegende Kontaktoberflächen (741, 742) einerseits gegen den äußeren Umfang (51) der Kolbenstange (5) und andererseits gegen den inneren Umfang (81) der Manschette (8) anliegen.

7. Kombinierter Betriebsbrems- und Feststellbremszylinder (1) nach einem der Ansprüche 3 bis 6, **dadurch gekennzeichnet, dass** die Dichtung (7) in einem Stück oder in mehreren Teilen gebildet ist.

8. Kombinierter Betriebsbrems- und Feststellbremszylinder (1) nach einem der Ansprüche 3 bis 7, **dadurch gekennzeichnet, dass** die Manschette (8) des Deckels (6) aus einem anderen Material hergestellt ist als das Gehäuse (4) des Feststellbremszylinders (2).

9. Kombinierter Betriebsbrems- und Feststellbremszylinder (1) nach einem der vorstehenden Ansprüche , **dadurch gekennzeichnet, dass** in der äußeren Endfläche (62) des Deckels (6) eine Aussparung (63) gebildet ist, wobei das erste Dichtungssegment (71) der Dichtung (7) in der Aussparung liegt.

10. Kombinierter Betriebsbrems- und Feststellbremszylinder (1) nach einem der vorstehenden Ansprüche , **dadurch gekennzeichnet, dass** der Betriebsbremszylinder (3) innerhalb einer Akkumulatorfederkammer (26) radial angeordnet ist.

11. Kombinierter Betriebsbrems- und Feststellbremszylinder (1) nach einem der vorstehenden Ansprüche , **dadurch gekennzeichnet, dass** der Feststellbremskolben (21) eine zentrale Öffnung mit einem Lager (28) einschließt, das der Kolbenstange (5) und dem Feststellbremskolben (21) ermöglicht, sich axial relativ zueinander zu bewegen.

12. Kombinierter Betriebsbrems- und Feststellbremszylinder (1) nach einem der vorstehenden Ansprüche , **dadurch gekennzeichnet, dass** die Kolbenstange (5) über ihre gesamte axiale Länge den gleichen äußeren Durchmesser aufweist.

13. Kombinierter Betriebsbrems- und Feststellbremszylinder (1) nach einem der vorstehenden Ansprüche , **dadurch gekennzeichnet, dass** ein erstes Betätigungselement (52) bereitgestellt ist, um einen Bremssattel (10) zu betätigen, der schwenkbar in einer Aussparung (54) an dem ersten Ende (53) der Kolbenstange (5) aufgenommen ist.

14. Pneumatische oder elektropneumatische Fahrzeugbremse mit mindestens einem kombinierten Betriebsbrems- und Feststellbremszylinder (1) nach einem der vorstehenden Ansprüche .

15. Pneumatische oder elektropneumatische Fahrzeugbremse nach Anspruch 14, umfassend einen Bremssattel (10) mit einem Flansch, auf dem der kombinierte Betriebs- und Feststellbremszylinder (1) montiert ist, wobei die äußere Endfläche (62) des Deckels (6) des Feststellbremszylinders (2), der die Feststellbremskammer (23) abgrenzt, dem Flansch des Bremssattels (10) zugewandt ist, wobei das erste Dichtungssegment (71) der Dichtung (7) zwischen der äußeren Endfläche (62) des Deckels (6) und dem Flansch des Bremssattels (10) aufliegt und als ein Druckentlastungsventil dient, um Druckluft zu ermöglichen, aus der Feststellbremskammer (23) oder aus einem inneren Raum, der mindestens teilweise von dem Bremssattel (10) abgegrenzt wird, in die Umgebung zu entweichen.

## Revendications

1. Cylindre combiné de frein de service et de frein de stationnement (1) pour actionner un frein de service et un frein de stationnement, comprenant
- un cylindre de frein de stationnement à ressort (2) avec un boîtier (4) cylindrique au moins en partie, un piston de frein de stationnement à ressort (21) et au moins un ressort accumulateur (22) qui charge le piston de frein de stationnement (21) dans une direction d'actionnement du frein de stationnement, dans lequel le piston de frein de stationnement (21) est guidé de manière déplaçable sur une surface circonférentielle radiale intérieure du cylindre de frein de stationnement (2), et le piston de frein de stationnement (21) et le boîtier (4) délimitent une chambre de frein de stationnement (23) qui peut être ventilée par une pression de frein de stationnement,
- un cylindre de frein de service (3) et un piston de frein de service (31), dans lequel le cylindre de frein de service (3) et le piston de frein de service (31) délimitent une chambre de frein de service (33) qui peut être actionnée et ventilée par une pression de frein de service,
- une tige de piston (5) couplée au piston de frein de stationnement (21) et au piston de frein de service (31),
- dans lequel le cylindre de frein de service (3), vu radialement, est agencé à l'intérieur du cylindre de frein de stationnement (2),
- dans lequel le boîtier (4) du cylindre de frein de stationnement (2) est fermé à une première extrémité par un couvercle (6) muni d'une ouverture (61) dans laquelle une première extrémité (53) de la tige de piston (5) fait saillie,
- dans lequel un joint annulaire (7) est agencé entre une circonférence extérieure (51) de la tige de piston (5) et une circonférence intérieure de l'ouverture (61) du couvercle (6),
**caractérisé en ce que**
- le joint (7) comporte un premier segment d'étanchéité (71) conçu comme une lèvre annulaire qui repose sur une face d'extrémité extérieure (62) du couvercle (6), de préférence sur une face d'extrémité extérieure d'un manchon (8) du couvercle (6), et fonctionne comme une soupape de décharge de pression pour permettre à l'air sous pression de s'échapper dans l'environnement.

2. Cylindre combiné de frein de service et de frein de stationnement (1) selon la revendication 1, **caractérisé en ce que** le joint (7) scelle l'ouverture (61) du couvercle (6), laquelle ouverture est ouverte sur la chambre de frein de stationnement (23).

3. Cylindre combiné de frein de service et de frein de stationnement (1) selon la revendication 1 ou 2, **caractérisé en ce que** le joint (7) comporte un deuxième segment d'étanchéité bulbeux (72) qui jouxte le premier segment d'étanchéité (71) et qui, à l'état assemblé, s'appuie contre la circonférence extérieure (51) de la tige de piston (5) avec une première surface d'appui (721) orientée à l'opposé du premier segment d'étanchéité (71) et s'appuie contre une circonférence intérieure (81) du manchon (8) prévu à l'ouverture (61) du couvercle (6) et s'étendant dans la chambre de frein de stationnement (23) avec une deuxième surface d'appui (722) opposée à la première surface d'appui (721).

4. Cylindre combiné de frein de service et de frein de stationnement (1) selon la revendication 3, **caractérisé en ce qu'**une pluralité de trous traversants (75) s'étendant de la première surface d'appui (721) à la deuxième surface d'appui (722) sont prévus dans le deuxième segment d'étanchéité bulbeux (72).

5. Cylindre combiné de frein de service et de frein de stationnement (1) selon la revendication 4, **caractérisé en ce que** les trous traversants (75) sont alignés radialement par rapport à l'axe longitudinal de la tige de piston (5).

6. Cylindre combiné de frein de service et de frein de stationnement (1) selon l'une quelconque des revendications 3 à 5, **caractérisé en ce que** le joint (7) comporte un troisième segment d'étanchéité bulbeux (73) et un quatrième segment d'étanchéité cylindrique en forme d'anneau (74) adjacent à ce dernier, le troisième segment d'étanchéité (73) présentant une face d'extrémité (731) faisant face à la chambre de frein de stationnement (23) et s'appuyant avec deux surfaces d'appui opposées (732, 733) d'une part contre la circonférence extérieure (51) de la tige de piston (5) et d'autre part contre la circonférence intérieure (81) du manchon (8), et le quatrième segment d'étanchéité (74) avec deux surfaces de contact opposées (741, 742) d'une part contre la circonférence extérieure (51) de la tige de piston (5) et d'autre part contre la circonférence intérieure (81) du manchon (8).

7. Cylindre combiné de frein de service et de frein de stationnement (1) selon l'une quelconque des revendications 3 à 6, **caractérisé en ce que** le joint (7) est formé d'une seule pièce ou en plusieurs parties.

8. Cylindre combiné de frein de service et de frein de stationnement (1) selon l'une quelconque des revendications 3 à 7, **caractérisé en ce que** le manchon (8) du couvercle (6) est fait d'un matériau différent de celui du boîtier (4) du cylindre de frein de stationnement (2).

9. Cylindre combiné de frein de service et de frein de stationnement (1) selon l'une quelconque des revendications précédentes, **caractérisé en ce qu'**un évidement (63) est formé dans la face d'extrémité extérieure (62) du couvercle (6), dans lequel se trouve le premier segment d'étanchéité (71) du joint (7).

10. Cylindre combiné de frein de service et de frein de stationnement (1) selon l'une quelconque des revendications précédentes, **caractérisé en ce que** le cylindre de frein de service (3) est disposé radialement à l'intérieur d'une chambre à ressort d'accumulateur (26).

11. Cylindre combiné de frein de service et de frein de stationnement (1) selon l'une quelconque des revendications précédentes, **caractérisé en ce que** le piston de frein de stationnement (21) inclut une ouverture centrale dotée d'un palier (28) permettant à la tige de piston (5) et au piston de frein de stationnement (21) de se déplacer axialement l'un par rapport à l'autre.

12. Cylindre de frein de service et de frein de stationnement combiné (1) selon l'une quelconque des revendications précédentes, **caractérisé en ce que** la tige de piston (5) présente le même diamètre extérieur sur toute sa longueur axiale.

13. Cylindre combiné de frein de service et de frein de stationnement (1) selon l'une quelconque des revendications précédentes, **caractérisé en ce qu'**un premier élément d'actionnement (52) destiné à actionner un étrier de frein (10) est reçu de manière pivotante dans un logement (54) à la première extrémité (53) de la tige de piston (5).

14. Frein pneumatique ou électropneumatique de véhicule avec au moins un cylindre combiné de frein de service et de frein de stationnement (1) selon l'une des revendications précédentes.

15. Frein pneumatique ou électropneumatique de véhicule selon la revendication 14, comprenant un étrier de frein (10) avec une bride, sur lequel est monté le cylindre combiné de frein de service et de frein de stationnement (1), dans lequel la face d'extrémité extérieure (62) du couvercle (6) du cylindre de frein de stationnement (2) délimitant la chambre de frein de stationnement (23) fait face à la bride de l'étrier de frein (10), dans lequel le premier segment d'étanchéité (71) du joint (7) repose entre la face d'extrémité extérieure (62) du couvercle (6) et la bride de l'étrier de frein (10) et fonctionne comme une soupape de décharge de pression pour permettre à l'air sous pression de s'échapper de la chambre de frein de stationnement (23) ou d'un espace intérieur délimité au moins partiellement par l'étrier de frein (10) vers l'environnement.
